# EUROPEAN PATENT SPECIFICATION

(11) **EP 1 804 419 B1**
(45) Date of publication and mention of the grant of the patent: **11.01.2012**
(21) Application number: 05771660.7
(22) Date of filing: 03.08.2005
(51) Int. Cl.: H04L 12/14, H04L 9/32, H04L 12/24

(54) **A METHOD FOR PROCESSING THE RE-AUTHORISATION BASED ON THE CHARGING OF THE PACKET DATA FLOW**
VERFAHREN ZUR VERARBEITUNG DER NEUAUTORISATION AUF DER BASIS DER ABRECHNUNG DES PAKETDATENFLUSSES
PROCEDE DE TRAITEMENT DE REAUTORISATION A BASE DE TAXATION DU FLUX DE DONNEES PAR PAQUETS

(30) Priority: 06.08.2004 CN 200410062686
(43) Date of publication of application: 04.07.2007
(73) Proprietor: Huawei Technologies Co., Ltd., Longgang District, Shenzhen Guangdong 518129 (CN)
(72) Inventor: DUAN, Xiaoqin, 518129 Guangdong Shenzhen (CN)
(74) Representative: Thun, Clemens
(86) International application number: PCT/CN2005/001186
(87) International publication number: WO 2006/012798

(56) References cited:
- CN-A- 1 429 005
- US-A1- 2002 191 597
- US-A1- 2004 019 539
- NORTEL NETWORKS (DJSIDORNUORTELNETWORKS COM): "Detailed Proposal for Diameter Credit Control for Flow Based Charging and GPRS in TS 32.299 v2", 3GPP DRAFT; S5-044448 32299 DETAILED DCC USE IN 3GPP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Sophia Antipolis, France; 20040702, 2 July 2004 (2004-07-02), XP050299204, [retrieved on 2004-07-02]
- NORTEL NETWORKS: "Diameter Credit Control for Flow Based Charging and GPRS", 3GPP DRAFT; S5-044334 DCC USE IN 3GPP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Beijing, china; 20040505, 5 May 2004 (2004-05-05), XP050298859, [retrieved on 2004-05-05]
- NORTEL NETWORKS: "Diameter Credit Control for Flow Based Charging and GPRS v2", 3GPP DRAFT; S5-044431 RESUBMISSION DCC USE IN 3GPP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Sophia Antipolis, France; 20040621, 21 June 2004 (2004-06-21), XP050299189, [retrieved on 2004-06-21]
- NORTEL NETWORKS (DJSIDORNUORTELNETWORKS COM): "Detailed Proposal for Diameter Credit Control for Flow Based Charging and GPRS in TS 32.299", 3GPP DRAFT; S5-044433 32299 DETAILED DCC USE IN 3GPP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Sophia Antipolis, France; 20040622, 22 June 2004 (2004-06-22), XP050299191, [retrieved on 2004-06-22]
- "3rd Generation Partnership Project; Technical Specification Group Services and Systems Aspects; Overall High Level Functionality and Architecture Impacts of Flow Based Charging, Stage 2 (Release 6) 3GPP TS 23.125 V6.0.0", 3GPP TS 23.125 V6.0.0, XX, XX, 1 March 2004 (2004-03-01), pages 1-29, XP002391829,
- "3rd Generation Partnership Project; Technical Specification Group Services and System Aspects; Overall Architecture Aspects of IP Flow Based Bearer Level Charging; Stage 2 (Release 6); 3GPP TR 23.825", ETSI STANDARDS, LIS, SOPHIA ANTIPOLIS CEDEX, FRANCE, vol. 3-SA2, no. V1.1.0, 1 January 2003 (2003-01-01), XP014031384, ISSN: 0000-0001
- "3rd Generation Partnership Project; Technical Specification Group Service and System Aspects; Telecommunication management; Charging Management; Diameter Charging Application; (Release 6)", 3GPP STANDARD; 3GPP TS 32.299, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V.0.2.0, 1 January 2004 (2004-01-01), pages 1-22, XP050374677,
- 3GPP: "3rd Generation Partnership Project;Technical Specification Group Service and System Aspects;Telecommunication management; Charging management;Diameter charging applications;(Release 6)", 3GPP DRAFT; S5-044556 TS DRAFT 32.299 V1.6.0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Montreal, Canada; 20040820, 1 January 2001 (2001-01-01), XP050299438, [retrieved on 2004-08-20]
- 3GPP: "3rd Generation Partnership Project;Technical Specification Group Service and System Aspects;Telecommunication management; Charging management;Diameter charging applications;(Release 6)", 3GPP DRAFT; S5-044568 TS 32.299 V1.6.0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Montreal, Canada; 20040820, 1 July 2004 (2004-07-01), XP050299450, [retrieved on 2004-08-20]

## Description

### Field of the Technology

The present invention relates to packet data charging techniques, more particularly to a method for handling re-authorization in packet data flow based charging.

### Background of the Invention

With the wide application of packet data service, how to charge packet data service accurately and reasonably has become a common concern of operators.

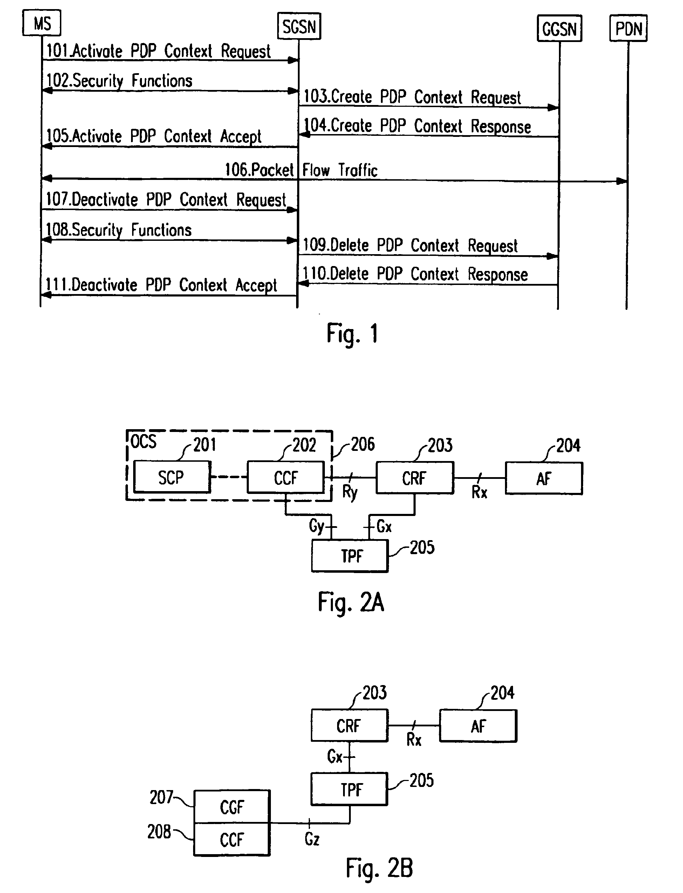

Figure 1 is the flowchart illustrating the activation, data transmission and de-activation of a Packet Data Protocol Context (PDP Context). As shown in Figure 1, in General Packet Radio Service (GPRS), the implementing procedure of PDP Context activation, interaction with an external Packet Data Network (PDN), and de-activation includes the following steps:
Step 101: Mobile Station (MS) sends an Activate PDP Context Request to a Serving GPRS Support Node (SGSN), and this Activate PDP Context Request carries the information of Network Layer Service Access Point Identifier (NSAPI), PDP type, Access Point Name (APN), Quality of Service (QoS) parameters, Transaction Identifier (TI) and so on, where NSAPI is used as a component of Tunnel Identifier (TEID)between SGSN and Gateway GPRS Support Node (GGSN) to identify the PDP Context; PDP Type includes the Peer-Peer Protocol (PPP) type, Internet Protocol (IP) type, etc; APN can be provided for SGSN by MS, by which SGSN addresses a corresponding GGSN and the GGSN determines the external network to be accessed by MS, or MS can choose not to provide APN for SGSN, in that case, SGSN selects the default APN according to the subscriber information of MS; QoS parameters denote the quality required by the packet data service specified by MS; TI is used for MS to identify a PDP context.
Step 102: After receiving the Activate PDP Context Request, SGSN performs Security Functions and encryption with UE, and this step is optional.
Step 103: SGSN analyses GGSN address information according to APN, if SGSN can figure out GGSN address information according to APN, TEID will be created for the PDP Context, and the TEID can be a combination of International Mobile Subscriber Identity (IMSI) and NSAPI. Then SGSN sends a Create PDP Context Request to GGSN, which carries PDP type, PDP address, APN, QoS parameters, TEID, and a select mode. The PDP address is the IP address of MS and is optional. When the Create PDP Context Request doesn't carry a PDP address, GGSN can allocate an IP address for MS in the subsequent process, or the Packet Data Network (PDN) that is finally connected with MS can allocate an IP address for MS. The select mode refers to the selecting mode for APN, namely whether APN is selected by MS or by SGSN. If SGSN cannot figure out GGSN address information according to APN, SGSN will reject the Activate PDP Context Request from MS.
Step 104: After receiving the Create PDP Context Request, GGSN determines an external PDN according to APN, then allocates Charging ID, starts charging, and confers on QoS. If GGSN can meet the service quality requirement of the QoS parameters, a Create PDP Context Response will be returned to SGSN, which carries the information of TEID, PDP address, Backbone Bearer protocol, negotiated QoS parameters, and Charging ID. If GGSN cannot meet the service quality requirement of the QoS parameters, GGSN will reject the Create PDP Context Request from SGSN, then SGSN will reject the Activate PDP Context Request from MS.
Step 105: After receiving the Create PDP Context Response, SGSN inserts NSAPI and GGSN address information in the PDP Context in order to identify this PDP Context, selects wireless priority according to QoS parameters, and then returns an Activate PDP Context Accept to MS, which carries the information of PDP type, PDP address, TI, negotiated QoS parameters, wireless priority, and PDP configuration options. Moreover, SGSN starts charging. MS receives the Activate PDP Context Accept and establishes the direct routing with GGSN. By this time the transmission channel between MS and PDN is established and data transmission can be carried out.
Step 106: MS makes interaction of packet data with PDN via SGSN and GGSN.
Step 107: After completing the interaction of packet data, MS sends to SGSN a Deactivate PDP Context Request, which carries TI.
Step 108: After receiving the Deactivate PDP Context Request, SGSN performs Security Functions and encryption with MS, and this step is optional.
Step 109 to Step 111: SGSN sends a Delete PDP Context Request to GGSN, which carries TEID. After receiving the Delete PDP Context Request, GGSN ends the charging of MS, deletes the PDP Context corresponding to TEID, and then sends a Delete PDP Context Response to SGSN, which carries TEID. After receiving the Delete PDP Context Response, SGSN ends the charging of MS, deletes the PDP Context corresponding to TEID, and then sends a Deactivate PDP Context Response to MS, which carries TI. After receiving the Deactivate PDP Context Response, MS deletes the PDP Context corresponding to TI.

It can be seen from the implementing procedure as shown in Figure 1, that only by the transmitted data flow of the PDP Context or by the time duration while the PDP Context is in activated state can charging be performed in the existing GPRS charging system as the start point of charging is set when a PDP Context is activated and the end point is set when the PDP Context is deleted. In practice, however, after the interaction between the MS and PDN, MS can carry out a plurality of services based on one activated PDP Context, i.e. if PDN can provide a plurality of services, such as Send/Receive Email service, Wireless Application Protocol (WAP) based browse service, File Transfer Protocol (FTP) based file transfer service and so on, an activated PDP Context can bear various services provided by PDN after MS establishes a transmission channel with this PDN. Meanwhile operators or service providers may adopt different charging approaches for different charging modes of various services, for instance, Send/Receive Email service can be charged based on trigger times of Sending and Receiving events, WAP browse service can be charged according to flow, file transfer service can also be charged according to flow while charging rate of WAP browse service is different from that of file transfer service. Thus, it is totally impossible to perform separate charging with the existing GPRS charging system for different services the same PDP Context bears.

In view of the above, it is being discussed in the 3rd Generation Partnership Project (3GPP) as to how to implement IP Flow Based Charging (FBC). As far as a packet data service is concerned, all the transmitted and received IP Flow when a UE subscriber uses the service can be IP Packet, referred to, in general, as Service Data Flow, i.e. Service Data Flow is a set of a plurality of IP Flows, therefore IP Flow Based Charging can truly reflect the resource occupation by a certain service. IP Flow Based Charging can be described like this: IP Flows of different services that the same PDP Context bears are separately screened out through some filters similar to sieves, then the IP Flows that are screened out by different filters are separately charged so as to reach the object of separately charging different Service Data Flows. In this way, the charging granularity based on IP Flow is far less than that based on a PDP Context. The charging granularity may be compared to the size of a hole of a sieve, the charging granularity based on one PDP Context will be like a sieve hole determined by one PDP Context while the charging granularity based on IP Flow will be like a sieve hole determined by one IP Flow, that is, there will be more than one sieve holes contained in one PDP Context. Therefore, compared with the charging based on one PDP Context, charging based on IP Flow can provide more charging approaches for operators or service providers.

In 3GPP, aspects of FBC like system architecture, function requirement and flow of interactive messages are described. FBC system architecture supporting online charging is shown in Figure 2A, in which Online Charging System (OCS) 206 is composed of Service Control Point (SCP) of Customized Application for Mobile Network Enhanced Logic (CAMEL) 201 and service data flow based Credit Control Function (CCF) 202. CCF 202 is connected with service data flow based Charging Rule Function (CRF) 203 through the interface Ry, CRF 203 is connected with Application Function (AF) 204 through the interface Rx and with Traffic Plane Function (TPF) 205 through the interface Gx, CCF 202 is connected with TPF 205 through the interface Gy.

FBC system architecture supporting offline charging is shown in Figure 2B, in which CRF 203 is connected with AF 204 through Rx and with TPF 205 through Gx, and TPF 205 is connected with Charging Gateway Function (CGF) 207 and Charging Collection Function (CCF) 208 respectively through Gz.

TPF 205 bears IP Flow, and when the IP Flow bearer is established, TPF 205 sends a Charging Rule Request to CRF 203 through the Gx interface, the Charging Rule Request thereof carries relevant information of subscriber and UE, bearer characteristics, network information, and so on, where the relevant information of subscriber and UE can be Mobile Station ISDN (MSISDN), International Mobile Subscriber Identity (IMSI) etc. In addition, since the bearer may be modified during IP Flow transmission, for example, re-conferring on QoS parameters when QoS parameters of the same service are different, charging rules may differ accordingly and charging rate will decrease as QoS parameters decrease. In this case, when the bearer is modified, TPF 205 can resend a Charging Rule Request to CRF 203 to request for new charging rules; CRF 203 selects a proper charging rule according to the input information provided by TPF 205 and then returns the selected charging rule to TPF 205, the charging rule thereof includes information of charging mechanism, charging type, charging key, Service Data Flow Filter, and charging rule priority. The charging mechanism can be online charging or offline charging; the charging type can be charging based on time span or data flow; the charging key is a parameter related with charging rate, and CRF 203 may provide only parameters related with charging rate for TPF 205, rather than directly provide charging rate for TPF 205; the Service Data Flow Filter is used to instruct TPF 205 which IP Flows are to be filtered, then TPF 205 charges these filtered IP Flows according to the charging rules. Service Data Flow Filter can include IP quintuple, which can include such information as Source/Destination IP Address, Source/Destination Port Number, and Protocol ID. For instance, CRF 203 instructs TPF 205 to filter the IP Flow with the Source IP Address 10.0.0.1, Destination IP Address 10.0.0.2, Source/Destination Port Number 20 and the protocol type Transmission Control Protocol (TCP), then charges the filtered IP Flow according to the charging rule.

CRF 203 can provide TPF 205 with event triggers so as to make TPF 205 request CRF 203 for new charging rules when specific events occur, for example, CRF 203 may make TPF 205 request for new charging rules when some events of bearer modification occur.

CRF 203 can determine the appropriate charging rule according to the input information of AF 204 or OCS 20 apart from the input information of TPF 205, for example, AF 204 may notify CRF 203 of the current service type used by the subscribers, and CRF 203 will select the corresponding charging rule according to this service type.

OCS 206 consists of two functions, SCP 201 and CCF 202, wherein, CCF 202 is the function implementing credit control and only used in the on-line charging system, which may be completed by adding new functions to the existing OCS 206. In the process of on-line charging, CCF 202 conducts management and control on the credit, when the user uses the service, CCF 202 makes authentication of the credits in the user's credit pool, and issues the credits available to the user to TPF 205 via interface Gy.

In addition, OCS 206 may require TPF 205 to submit reports when re-authorization triggers occur, then OCS 206 will re-authorize the credit based on the corresponding re-authorization triggers reported by TPF 205 and may possibly re-calculate the credit. For example, when the credit provided for TPF 205 by OCS 206 have been used up, TPF 205, according to the credit authorization lifetime expiry event in the re-authorization triggers, needs to report to OCS 206 the occurrence of the credit authorization lifetime expiry event; OCS 206 re-calculates the credits available to the user For another example, when performing location-specific charging, OCS 206 determines the charging rate according to the current location of the user and calculates the credit based on this rate; when the user moves to another location, if SGSN changes, TPF 205, according to the event of SGSN change in the re-authorization triggers, reports to OCS 206 the occurrence of the event of SGSN change, and re-determines the charging rate based on the updated current location of the user and recalculates the credit. For another example, OCS determines the charging rate based on the current QoS parameter of the service used by the user, when the user modifies the QoS parameter, TPF, according to the QoS change event in the re-authorization triggers, needs to report to OCS 206 the occurrence of the QoS change event, OCS 206 then determines the charging rate based on the modified QoS parameter and re-calculates the credit. The re-authorization triggers defined in the specifications may include credit authorization lifetime expiry event, idle timeout event, charging rule is changed event, as well as some GPRS events, such as SGSN change event, QoS change event, and Radio Access Technique (RAT) type change event.

For a GPRS network, TPF 205 is GGSN, AF is a service gateway or service server in PDN, CRF 203 is an added logical entity. TPF 205 is the executing point of charging rules and CRF 203 is the control point of charging rules.

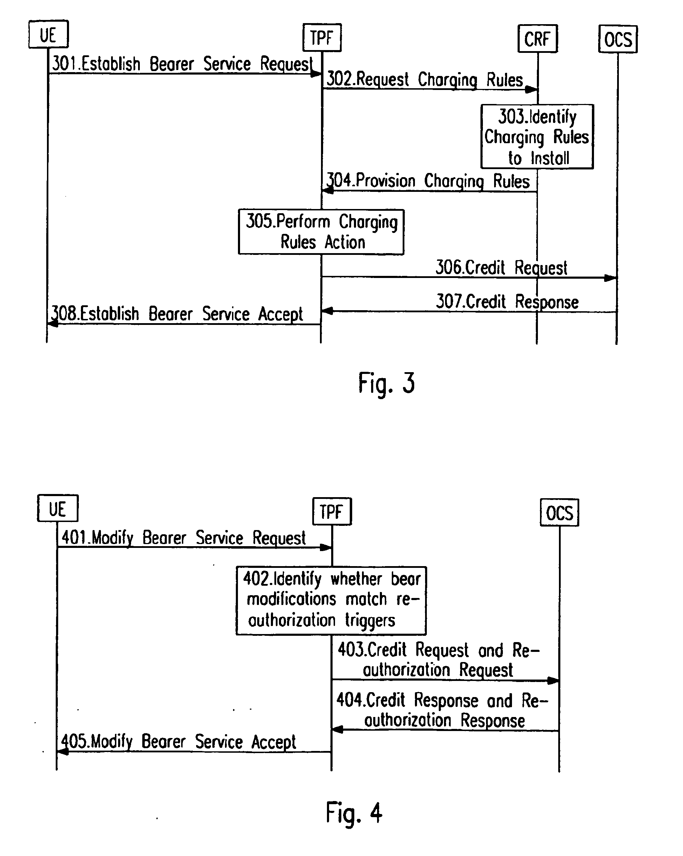

3GPP has defined the implementing procedure TPF requesting a charging rule from CRF under on-line charging circumstances when a bearer is established, as shown in Figure 3:
Step 301: User Equipment (UE) sends an Establish Bearer Service Request to TPF. In a GPRS network, it means that GGSN receives a Create PDP Context Request.
Step 302: After receiving the Establish Bearer Service Request, TPF sends to CRF a Request Charging Rules, which carries the input information provided for CRF to determine the charging rule.
Step 303 to 304: After receiving the Request Charging Rules, CRF selects the appropriate charging rule based on the input information carried in the Request Charging Rules or based on the relevant input information provided by AF, and then returns to TPF the Provision Charging Rules, which may carry the selected charging rule and the operation instruction thereof.
Step 305: After receiving the Provision Charging Rules, TPF performs the appropriate operation defined by the CRF-selected charging rule based on the operation instruction of the charging rule.
Step 306: TPF sends to OCS a Credit Request, requesting the credit from OCS.
Step 307: After receiving the Credit Request, OCS determines the user's credit, and then returns to TPF a Credit Response, if OCS succeeds in determining the credit, then this Credit Response will carry the credit, if OCS fails to determine the credit, this Credit Response will carry the error cause.
Step 308: After receiving the Credit Response, TPF returns to UE the Establish Bearer Service Accept, and if the Credit Response carries the credit, then TPF will accept the Establish Bearer Service Request sent by the UE, and continue with the subsequent bearer-establishing process; if the Credit Response carries no user's credit, TPF will reject the Establish Bearer Service Request sent by the UE.

Under on-line charging circumstances, bearer modification will trigger a process of TPF requesting OCS to make re-authorization, the specific implementation is shown in Figure 4:
Step 401: UE sends a Modify Bearer Service Request to TPF, in a GPRS network, it means that GGSN receives an Update PDP Context Request.
Step 402: After receiving the Modify Bearer Service Request, TPF compares the Modify Bearer event with the pre-configured re-authorization triggers, if they match, go to step 403; otherwise, end the current re-authorization process.
Step 403: TPF sends to OCS a Credit Request and Re-authorization Request, which carries the balance of the credit and information related with the charging rule, requesting OCS to re-calculate the credits of the user. The information related with the charging rule provided for OCS by TPF may come from CRF.
Step 404: After receiving the Credit Request and Re-authorization Request, OCS re-calculates the credit and then returns to TPF a Credit Response and Re-authorization Response, if OCS obtains the credit by calculation, the Credit Response and Re-authorization Response will carry the credit re-calculated by OCS; if OCS fails to calculate the credit, the Credit Response and Re-authorization Response may carry the error cause.
Step 405: After receiving the Credit Response and Re-authorization Response, TPF returns to UE a Modify Bearer Service Accept, if the Credit Response and Re-authorization Response carries the credit, TPF will accept the Modify Bearer Service Request sent by the UE and continue with the subsequent process of bearer modification; if the Credit Response and Re-authorization Response carries no credit, TPF will reject the Modify Bearer Service Request sent by the UE.

At present, although there is the definition in the Specifications for TPF initiating a re-authorization process to OCS based on that the re-authorization trigger has been detected when a bearer is modified under on-line charging circumstances, and requesting OCS to re-calculate the credit and return the result to TPF, however, in the Specifications, no source of the re-authorization triggers in TPF is mentioned, which leads to uncertainty in the implementation of a re-authorization process.

And in the document NORTEL NETWORKS (DJSIDORNUORTELNETWORKS COM): "Detailed Proposal for Diameter Credit control for Flow Based charging and GPRS in TS 32.299 v2", 3GPP DRAFT;S5-0444448 32299 DETAILED DCC USE IN 3GPP,3RD GENERATION PARTNERSHIP PROJECT (3GPP),MOBILE COMPETENECT CENTRE;650,ROUTE DES LUCIOSLES; F-06921 SOPHIA-ANTIPOLIS CEDEX;FRANCE, vol.SA WG5,NO. Sophia Antipolis, France; 20040702, 2 July 2004 (2004-07-02), XP050299204, a method for processing the re-authorization based on the charging of the packet data flow is described. And the main idea of this method lies in that OCS instructs the TPF to monitor for such events by using a Trigger AVP.

### Summary of the Invention

In view of the above, the present invention is to provide a method for handling re-authorization in packet data flow based charging so as to clarify the implementing process of re-authorization.

The technical solution in accordance with the present invention is achieved as follows:

A method for processing the re-authorization based on the charging of the packet data flow, including:
Traffic Plane Function (TPF) monitoring re-authorization triggers;
when a re-authorization trigger is detected, TPF requesting a re-authorization of the credit in a Online Charging System (OCS), and wherein the step of TPF monitoring the re-authorization triggers comprises pre-configuring the re-authorization trigger in TPF and receiving (507) the re-authorization trigger information from the OCS, and the re-authorization trigger information comprises a re-authorization trigger identity.

In accordance with the method provided by the present invention, TPF pre-configures re-authorization triggers, or OCS provides TPF with re-authorization triggers, so that TPF is able to monitor accurately the re-authorization triggers to be detected; TPF detects the re-authorization trigger and requests re-authorization of the credit in OCS when the re-authorization trigger is detected, OCS re-calculates the credit and returns to TPF the recalculated credit. In this way, as there are more approaches for providing re-authorization triggers, the re-authorization process in packet data flow based charging can be implemented more clearly and definitely. Moreover, when requesting the re-authorization of the credit in OCS, TPF can further provide OCS with the re-authorization trigger that has triggered the current re-authorization process, so that the re-authorization information interaction between TPF and OCS becomes more reasonable and better-defined.

### Brief Description of the Drawings

Figure 1 is a flowchart illustrating PDP Context Activation, data transmission and De-activation;
Figure 2A is a schematic diagram illustrating the structure of on-line charging FBC system;
Figure 2B is a schematic diagram illustrating the structure of off-line charging FBC system;
Figure 3 is the flowchart of establishing a bearer in on-line charging in the prior art;
Figure 4 is the flowchart for TPF to request the re-authorization in the OCS when a bearer is modified in the prior art;
Figure 5 is the flowchart of establishing a bearer in on-line charging in accordance with the present invention;
Figure 6 is the flowchart for TPF to request the re-authorization in the OCS when a bearer is modified according to one embodiment of the present invention; and
Figure 7 is the flowchart for TPF to request the re-authorization in the OCS when a bearer is modified according to another embodiment of the present invention.

### Embodiments of the Invention

In order to make technical solution and advantages of the present invention more explicit, the present invention is presented in detail with reference to the drawings as follows:

In accordance with the present invention, TPF pre-configures re-authorization triggers, or OCS provides TPF with re-authorization triggers; TPF detects the re-authorization triggers and requests the re-authorization of credit in the OCS when the re-authorization trigger is detected, OCS re-calculates the credit and returns to TPF the recalculated credit.

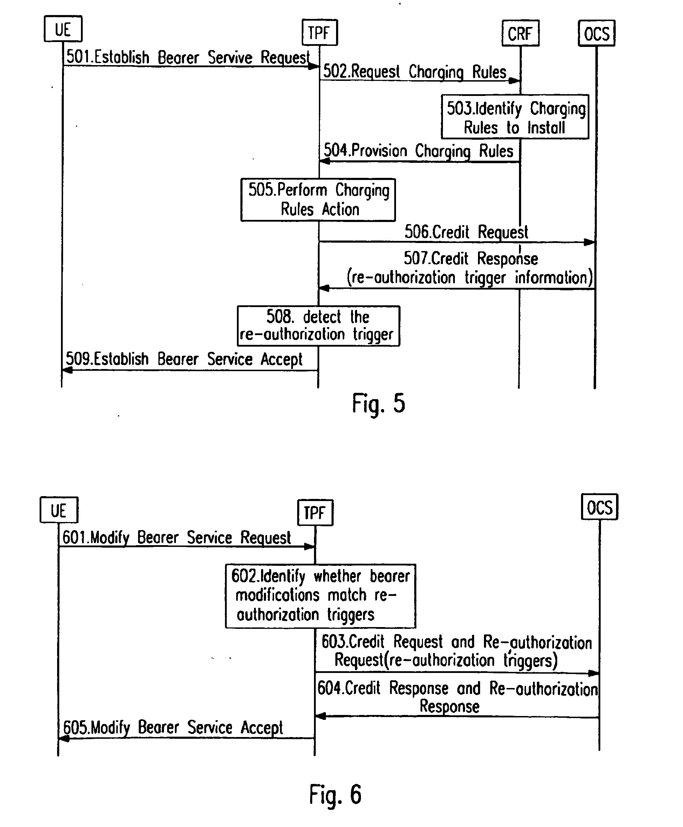

Figure 5 is the flowchart of establishing a bearer in on-line charging in accordance with the present invention. As shown in Figure 5, the specific implementation of establishing a bearer in on-line charging includes the following steps:
Step 501 to step 506 are basically the same as step 301 to step 306.
Step 507: After receiving the Credit Request, OCS determines the credit, and then returns to TPF a Credit Response. If OCS succeeds in determining the credit, this Credit Response carries the credit, and, further, the re-authorization trigger information, requesting TPF to monitor the appropriate re-authorization triggers. If OCS fails to determine the credit, this Credit Response carries the of error cause. The re-authorization trigger information in the present invention may include re-authorization triggers, or identities of re-authorization triggers, or combination of re-authorization triggers and identities of re-authorization triggers, or may even include null.

If TPF didn't pre-configures any re-authorization triggers, then the re-authorization trigger information that OCS provides for TPF includes re-authorization triggers, and TPF is requested to monitor the re-authorization triggers received from the OCS. If TPF has pre-configured re-authorization triggers, then the re-authorization trigger information may include the identities of re-authorization triggers, and TPF is requested to monitor the re-authorization triggers corresponding to the identities; or the re-authorization trigger information may include a combination of re-authorization triggers and identities of re-authorization triggers, and TPF is requested to monitor the re-authorization triggers from OCS and the re-authorization triggers corresponding to the identities; or the re-authorization trigger information may contain null, then according to the pre-setting, TPF monitor all the pre-configured re-authorization triggers or not to monitor any of the pre-configured re-authorization triggers.

When there are already some pre-configured re-authorization triggers in TPF, the re-authorization trigger information may also include re-authorization triggers; then according to the pre-setting, TPF will monitor both the re-authorization triggers received from the OCS and all the pre-configured re-authorization triggers or just to monitor the re-authorization triggers received from the OCS.

Step 508: After receiving the Credit Response, if this Credit Response carries the re-authorization triggers information, TPF will start monitoring the appropriate re-authorization triggers according to the re-authorization trigger information, and if detecting the appropriate re-authorization triggers, TPF will request re-authorization of the credit in the OCS.

Step 509 is basically the same as step 308.

It is not strictly required that Step 508 and step 509 be performed in order.

In the present invention, OCS can make the re-authorization triggers information carried by the Credit Response or carried by an independent message to be sent to TPF.

Figure 6 is the flowchart for TPF to request the re-authorization in the OCS when a bearer is modified according to one embodiment of the present invention. As shown in Figure 6, the implementation of TPF requesting the re-authorization in the OCS in this embodiment includes the following steps:
Step 601 to step 602 are basically the same as step 401 to step 402.
Step 603: TPF sends to OCS a Credit Request and Re-authorization Request, which carries the balance of the credit and related information of the charging rule, requesting OCS to re-calculate the credit. The related information of the charging rule provided for OCS by TPF may come from CRF. The Credit Request and Re-authorization Request may further carry the currently occurring re-authorization trigger to inform OCS of the specific re-authorization trigger which is currently triggering the re-authorization process.
Step 604 to step 605 are basically the same as step 404 to step 405.

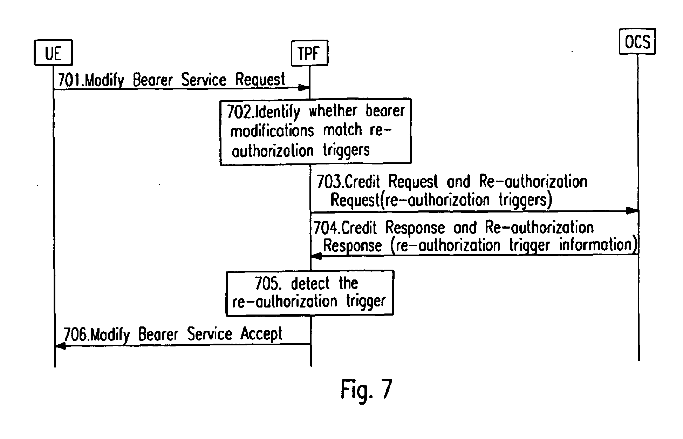

Figure 7 is the flowchart for TPF to request the re-authorization in the OCS when a bearer is modified according to another embodiment of the present invention. As shown in Figure 7, the implementation of TPF requesting the re-authorization in the OCS in this embodiment includes the following steps:
Step 701 to step 702 are basically the same as step 401 to step 402.
Step 703 is basically the same as step 603.
Step 704: After receiving the Credit Request, OCS re-calculates the credit, and then returns to TPF a Credit Response and Re-authorization Response, if OCS succeeds in calculating the credit, then this Credit Response and Re-authorization Response carries the credit recalculated by OCS; if OCS fails to calculate the credit, and if the credit is not sufficient, then this Credit Response and Re-authorization Response may carry the error cause. The Credit Response and Re-authorization Response may further carry the re-authorization trigger information, requesting TPF to update the monitored re-authorization triggers.

If TPF didn't pre-configured any re-authorization triggers, the re-authorization trigger information provided for TPF by OCS includes re-authorization triggers, requesting TPF to monitor the re-authorization triggers received from OCS. If TPF has pre-configured some re-authorization triggers, the re-authorization trigger information may include identities of re-authorization triggers, requesting TPF to monitor the re-authorization triggers corresponding to the appropriate identities. The re-authorization trigger information may also include a combination of re-authorization triggers and identities of re-authorization triggers, requesting TPF to monitor the re-authorization triggers received from the OCS and the re-authorization triggers corresponding to the appropriate identities. The re-authorization trigger information may contain null as well, then according to the pre-setting, TPF monitors all the pre-configured re-authorization triggers or not to monitor any of the pre-configured re-authorization triggers.

When there are already some pre-configured re-authorization triggers in TPF, the re-authorization trigger information may also include re-authorization triggers; then according to the pre-setting, TPF will monitor both the re-authorization triggers received from the OCS and all the pre-configured re-authorization triggers or just to monitor the re-authorization triggers received from the OCS.

Step 705: After receiving the Credit Response and Re-authorization Response, if this Credit Response and Re-authorization Response carries the re-authorization trigger information, TPF will start monitoring the appropriate re-authorization triggers according to the information, if having detected the appropriate re-authorization triggers, TPF will request re-authorization of the credit in the OCS.

Step 706 is basically the same as 405.

The above description is just the preferred embodiments of the present invention, and should not be used to confine the protection scope thereof.

## Claims

1. A method for processing the re-authorization based on the charging of the packet data flow, comprising:
Traffic Plane Function, TPF, monitoring (508) re-authorization triggers;
when a re-authorization trigger is detected, TPF requesting a re-authorization of the credit in the Online Charging System OCS;
wherein the step of TPF monitoring the re-authorization triggers comprises pre-configuring the re-authorization trigger in TPF and receiving (507) the re-authorization trigger information from the OCS, and the re-authorizadon trigger information comprises a re-authorization trigger identity.

2. The method according to Claim 1, wherein the re-authorization trigger information further comprises: the re-authorization trigger.

3. The method according to Claims 1 or 2, wherein the re-authorization trigger information is provided in a Credit Response message from the OCS to TPF when a bearer is established, or provided in a Credit Response and Re-authorization Response message from the OCS to TPF when the bearer is modified.

4. The method according to any one of Claims 1- 3, wherein the step of TPF requesting the re-authorization of the credit in the OCS further comprises: TPF providing the OCS with the re-authorization trigger which is currently triggering a re-authorization process.

5. The method according to any one of Claims 1-4, further comprising: the OCS re-calculating the credit and returning to TPF the recalculated credit after the step of TPF requesting the re-authorization of the credit in the OCS.

## Patentansprüche

1. Verfahren zur Verarbeitung der Neuautorisation auf der Basis der Abrechnung des Paketdatenflusses, das Folgendes umfasst:
eine Traffic Plane Function TPF überwacht (508) Neuautorisationsauslösungen;
wenn eine Neuautorisationsauslösung detektiert wird, fordert die TPF eine Neuautorisation des Kredits in dem Online Charging System OCS an;
wobei der Schritt, dass die TPF die Neuautorisationsauslösungen überwacht, das Vorkonfigurieren der Neuautorisationsauslösung in der TPF und Empfangen (507) der Neuautorisationsauslösungsinformationen von dem OCS umfasst und die Neuautorisationsauslösungsinformationen eine Neuautorisationsauslösungsidentität umfassen.

2. Verfahren nach Anspruch 1, wobei die Neuautorisationsauslösungsinformationen weiterhin Folgendes umfassen: die Neuautorisationsauslösung.

3. Verfahren nach Anspruch 1 oder 2, wobei die Neuautorisationsauslösungsinformationen in einer Credit-Response-Nachricht von dem OCS an die TPF geliefert werden, wenn ein Träger etabliert ist, oder in einer Credit-Response- und Neuautorisationsantwortnachricht von dem OCS an die TPF bereitgestellt werden, wenn der Träger modifiziert ist.

4. Verfahren nach einem der Ansprüche 1-3, wobei der Schritt, dass die TPF die Neuautorisation des Kredits in dem OCS anfordert, weiterhin Folgendes umfasst: die TPF liefert dem OCS die Neuautorisationsauslösung, die aktuell einen Neuautorisationsprozess auslöst.

5. Verfahren nach einem der Ansprüche 1-4, weiterhin umfassend: das OCS berechnet den Kredit neu und schickt den neuberechneten Kredit an die TPF zurück nach dem Schritt, dass die TPF die Neuautorisation des Kredits in dem OCS anfordert.

## Revendications

1. Procédé de traitement de la réautorisation basée sur la taxation d'un flux de données par paquets, comprenant :
une Fonction de Plan de Trafic, TPF, contrôlant (508) des déclencheurs de réautorisation ;
quand un déclencheur de réautorisation est détecté, la demande par la TPF d'une réautorisation du crédit sur le Système de Taxation en Ligne, OCS ;
l'étape de contrôle par la TPF des déclencheurs de réautorisation comprenant la préconfiguration du déclencheur de réautorisation dans la TPF et la réception (507) des informations de déclencheur de réautorisation depuis l'OCS, et les informations de déclencheur de réautorisation comprenant une identité de déclencheur de réautorisation.

2. Procédé selon la revendication 1, dans lequel les informations de déclencheur de réautorisation comprennent en outre le déclencheur de réautorisation.

3. Procédé selon la revendication 1 ou 2, dans lequel les informations de déclencheur de réautorisation sont fournies par l'OCS dans un message de Réponse de Crédit à la TPF quand un support est établi, ou fournies par l'OCS dans un message de Réponse de Crédit et Réponse de Réautorisation à la TPF quand le support est modifié.

4. Procédé selon l'une quelconque des revendications 1 à 3, dans lequel l'étape de demande par la TPF de la réautorisation du crédit dans l'OCS comprend en outre : la fourniture par la TPF à l'OCS du déclencheur de réautorisation qui déclenche actuellement un processus de réautorisation.

5. Procédé selon l'une quelconque des revendications 1 à 4, comprenant en outre : le recalcul par l'OCS du crédit et le renvoi à la TPF du crédit recalculé après l'étape de demande par la TPF de la réautorisation du crédit dans l'OCS.
